# EUROPEAN PATENT APPLICATION

(11) **EP 4 102 353 A1**
(43) Date of publication of application: **14.12.2022**
(21) Application number: 22173982.4
(22) Date of filing: 18.05.2022
(51) Int. Cl.: G06F 3/16, G01S 5/00, G10L 17/00, G10L 21/0208, G10L 21/0272, H04W 4/02

(54) **SITUATIONALLY AWARE SOCIAL AGENT**

(30) Priority: 11.06.2021 US 202117345429
(71) Applicant: Disney Enterprises, Inc., Burbank, CA 91521 (US)
(72) Inventor: KUMAR, Komath Naveen, Burbank, 91521 (US); KENNEDY, James R., Burbank, 91521 (US); PAPON, Jeremie A., Burbank, 91521 (US); FIDALEO, Douglas A., Burbank, 91521 (US)
(74) Representative: Dr. Weitzel & Partner

(57) **Abstract**

A system for providing a situationally aware social agent includes processing hardware and a memory storing a software code. The processing hardware executes the software code to receive radar data and audio data, process the radar data and the audio data to obtain radar-based location data and audio-based location data each corresponding to a location of one or more user(s), and process the radar data and the audio data to obtain radar-based venue data and audio-based venue data each corresponding to an environment surrounding the user(s). The software code further determines, using the radar-based location data and the audio-based location data, the location of the user(s), determines, using the radar-based venue data and the microphone-based venue data, the environment surrounding the user(s), and identifies, based on the location and the environment, an interactive expression for use by the situationally aware social agent to interact with the user(s).

## Description

### BACKGROUND

Advances in artificial intelligence have led to the development of a variety of devices providing dialogue-based interfaces that simulate social agents. However, typical shortcomings of conventional social agents include the inability to engage in natural, fluid conversations, the inability to engage with more than one person at a time, and the failure to respond to environmental cues. Moreover, although existing social agents offer some degree of user personalization, for example tailoring responses to an individual user's characteristics or preferences, that personalization remains limited by their fundamentally transactional design. That is to say, their transactional functionality makes it unnecessary for conventional social agents to remember more than a limited set of predefined keywords, such as user names and basic user preferences.

The underlying problem of the solution consists in the following: There is a need in the art for an automated solution for providing a situationally aware social agent capable of interacting with multiple users concurrently in a natural and attentive manner. The said problem will be solved by each of the independent claims.

### BRIEF DESCRIPTION OF THE DRAWINGS

Figure 1 shows an exemplary system for providing a situationally aware social agent, according to one implementation;
Figure 2A shows a more detailed diagram of an input unit suitable for use as a component of a situationally aware social agent, according to one implementation
Figure 2B shows a more detailed diagram of an output unit suitable for use as a component of a situationally aware social agent, according to one implementation
Figure 3 shows an exemplary software code suitable for execution by a processing hardware of the system of Figure 1, according to one implementation; and
Figure 4 shows a flowchart presenting an exemplary method for use by a system for providing a situationally aware social agent, according to one implementation.

### DETAILED DESCRIPTION

The following description contains specific information pertaining to implementations in the present disclosure. One skilled in the art will recognize that the present disclosure may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

The present application discloses automated systems and methods for providing a situationally aware social agent that address and overcome the deficiencies in the conventional art. It is noted that, as used in the present application, the terms "automation," "automated," and "automating" refer to systems and processes that do not require the participation of a human administrator. Although in some implementations the interactive expressions identified by the systems and methods disclosed herein may be reviewed or even modified by a human system administrator, that human involvement is optional. Thus, the methods described in the present application may be performed under the control of hardware processing components of the disclosed social agents.

It is further noted that, as defined in the present application, the term "interactive expression" may refer to a language based communication in the form of speech or text, for example, and in some implementations may include one or more non-verbal expressions. Moreover, the term "non-verbal expression" may refer to a vocalization that is not language based, i.e., a non-verbal vocalization, as well as to a physical gesture, facial expression, or posture. Examples of a non-verbal vocalization may include a sigh, a murmur of agreement or disagreement, a giggle, or a raised eyebrow, to name a few.

It is also noted that, as used in the present application, the term "social agent" refers to a non-human communicative entity rendered in hardware and software that is designed for expressive interaction with one or more human users. In some use cases, a social agent may be instantiated as a virtual character rendered on a display and appearing to watch and listen to a user in order to have a conversation with the user. In other use cases, a social agent may take the form of a machine, such as a robot for example, appearing to watch and listen to a user in order to converse with the user. Alternatively, a social agent may be implemented as an automated voice response (AVR) system, or an interactive voice response (IVR) system, for example.

Moreover, as used in the present application, the expression "situationally aware social agent" refers to a social agent that uses environmental cues over and above direct interaction with a user or users (hereinafter "user(s)") to influence identification of appropriate interactive expressions for use by the social agent. Such environmental cues may include background conversations that do not include the user(s) or the social agent, or audio outputs from one or more entertainment devices or systems. In some implementations the situationally aware social agent may be configured to distinguish between user relevant environmental cues and background noise, and to filter out the latter to enhance sensitivity to the former.

Merely by way of example, in a use case in which the environment surrounding user(s) engaged in an interaction with the situationally aware social agent includes background conversations and audio from a television (TV) news broadcast, the situationally aware social agent may filter out the background conversations irrelevant to the interaction with the user(s), but may incorporate the subject matter of the TV news broadcast into an interactive expression for use by the social agent to interact with the user(s). Alternatively, in a similar environmental situation, the situationally aware social agent may recognize that several background conversations address the same topic, and may incorporate that topic, or the preoccupation of others with that topic, into the interaction with the user(s).

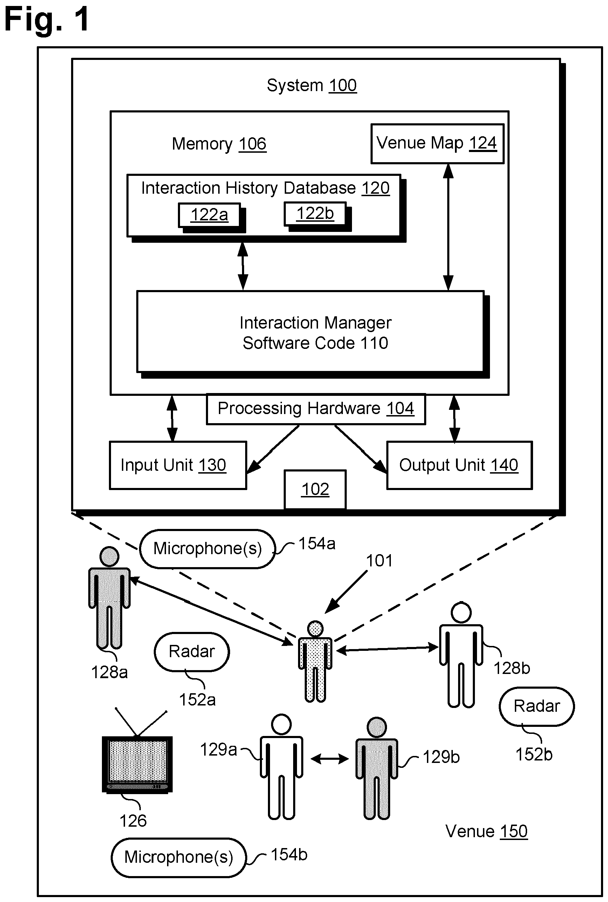

Figure 1 shows a diagram of system 100 for providing situationally aware social agent 101 (hereinafter "social agent 101"), according to one exemplary implementation. As shown in Figure 1, system 100 includes transceiver 102, processing hardware 104, input unit 130, output unit 140, and memory 106 implemented as a non-transitory storage medium. According to the present exemplary implementation, memory 106 stores interaction manager software code 110, interaction history database 120 including interaction histories 122a and 122b, and in some implementations may also store venue map 124 of venue 150.

As further shown in Figure 1, system 100 is implemented within a use environment provided by venue 150, which may include one or more radar units or radar arrays 152a and 152b (hereinafter "radar 152a/152b") and one or more microphones or microphone arrays 154a and 154b (hereinafter "microphone(s) 154a/154b"). It is noted that system 100 may be configured to receive wireless communications from radar 152a/152b and microphone(s) 154a/154b using transceiver 102. Transceiver 102 may be implemented as a fourth generation (4G) wireless transceiver, or as a 5G wireless transceiver. In addition, or alternatively, transceiver 102 may be configured for communications using one or more of WiFi, Bluetooth, ZigBee, and 60 GHz wireless communications methods. Also shown in Figure 1 are one or more human persons 128a and 128b interacting with social agent 101 (hereinafter "user(s) 128a/128b"), one or more human persons interacting with one another but not with user(s) 128a/128b or social agent 101 (hereinafter "person(s) 129a/129b"), and entertainment system 126 shown in Figure 1 as a TV.

It is noted that although Figure 1 depicts social agent 101 as being instantiated as a robot, in other implementations, social agent 101 may be instantiated as a tabletop or shelf-top device, such as a speaker, display, or figurine, or as a wall mounted speaker or display, to name a few examples. Moreover, in some implementations, social agent 101 may be presented as a virtual character rendered on a display. It is further noted that although entertainment system 126 is shown as a TV in Figure 1, that representation is also merely exemplary. In other implementations, entertainment system 126 may take the form of a radio, a stereo, a speaker or speaker system, a digital media player, a desktop, laptop, or tablet computer, a smartphone, a game platform, or a wearable entertainment device, to name a few examples.

In various implementations, venue 150 may be an indoor venue or an outdoor venue, and in some implementations, venue 150 may be moving relative to the surface of the Earth. For example, venue 150 may be a moving automobile, bus, boat, plane, or other vehicle. Moreover, in various implementations, venue 150 may be a small private venue, a large group venue, or a public venue. A small private indoor venue may be a private residence, a hotel room, a cruise ship cabin, or an enclosed car, for example, while a small private outdoor venue may be a private open air box at a baseball park, or an open private watercraft, for instance. Examples of a large group indoor venue may include theaters, concert halls, indoor arenas, shopping complexes, airports or other transportation hubs, to name a few, while a large group outdoor venue may be an open air sports stadium, polo field or other equestrian event setting, or an open air shopping mall, again to name a few examples. Examples of an indoor public venue may include a public auditorium or recreation center, while an example of an outdoor public venue may be a public park, pool, or beach.

Venue map 124 may be a two-dimensional (2D) or three-dimensional (3D) map of venue 150, including the locations of inanimate objects, such as furniture, vehicle seats, and entertainment system 126. Moreover, in some implementations, the locations of radar 152a/152b and microphone(s) 154a/154b may be fixed in venue 150, and those locations may be included in venue map 124. However, in other implementations, radar 152a/152b and microphone(s) 154a/154b may be moving within venue 150. In those latter implementations, the distance or distances separating radar 152a/152b and microphone(s) 154a/154b may be kept fixed although their locations are not.

It is noted that although Figure 1 shows two users 128a and 128b to be present in venue 150, that representation is provided merely in the interests of conceptual clarity. In various use cases, as few as one user, or more than two users may be present in venue 150. Moreover, in various use cases in which multiple users 128a and 128b are present in venue 150, social agent 101 may be configured to interact with users 128a and 128b individually, or may be configured to interact with some or all of users 128a and 128b in a group interaction, i.e., substantially concurrently.

It is noted that although Figure 1 shows interaction history database 120 as storing two interaction histories 122a and 122b, that exemplary depiction is also provided merely in the interests of conceptual clarity. More generally, interaction history database 120 may store more than two interaction histories, such as hundreds, thousands, or millions of interaction histories, for example. Moreover, in various implementations, each of interaction histories 122a and 122b may be an interaction history dedicated to interactions of social agent 101 with a particular user, such as one of users 128a or 128b, or to one or more distinct temporal sessions over which an interaction of social agent 101 with one or more of users 128a and 128b extends. That is to say, in some implementations, interaction histories 122a and 122b may each be personal to respective users 128a and 128b, while in other implementations, each of interaction histories 122a and 122b may be dedicated to a particular temporal interaction session or series of temporal interaction sessions including social agent 101 and more than one of users 128a and 128b.

Moreover, while in some implementations interaction histories 122a and 122b may be comprehensive with respect to a particular user or temporal interaction, in other implementations, interaction histories 122a and 122b may retain only a predetermined number of the most recent interactions by a user, or a predetermined number of interactive exchanges or turns during an interaction. Thus, in some implementations, interaction history 122a may store only the most recent four, or any other predetermined number of interactive responses between social agent 101 and user 128a, or the most recent four, or any other predetermined number of interactive responses by any or all participants in a group interaction session.

Although the present application refers to interaction manager software code 110, interaction history database 120, and venue map 124 as being stored in memory 106 for conceptual clarity, more generally, memory 106 may take the form of any computer-readable non-transitory storage medium. The expression "computer-readable non-transitory storage medium," as defined in the present application, refers to any medium, excluding a carrier wave or other transitory signal that provides instructions to processing hardware 104 of system 100. Thus, a computer-readable non-transitory medium may correspond to various types of media, such as volatile media and non-volatile media, for example. Volatile media may include dynamic memory, such as dynamic random access memory (dynamic RAM), while non-volatile memory may include optical, magnetic, or electrostatic storage devices. Common forms of computer-readable non-transitory storage media include, for example, optical discs, RAM, programmable read-only memory (PROM), erasable PROM (EPROM), and FLASH memory.

Processing hardware 104 may include multiple hardware processing units, such as one or more central processing units, one or more graphics processing units, and one or more tensor processing units, one or more field-programmable gate arrays (FPGAs), and custom hardware for machine-learning training or inferencing, for example. By way of definition, as used in the present application, the terms "central processing unit" (CPU), "graphics processing unit" (GPU), and "tensor processing unit" (TPU) have their customary meaning in the art. That is to say, a CPU includes an Arithmetic Logic Unit (ALU) for carrying out the arithmetic and logical operations of computing platform 102, as well as a Control Unit (CU) for retrieving programs, such as interaction manager software code 110, from memory 106, while a GPU may be implemented to reduce the processing overhead of the CPU by performing computationally intensive graphics or other processing tasks. A TPU is an application-specific integrated circuit (ASIC) configured specifically for artificial intelligence (AI) applications such as machine learning modeling.

It is noted that, as defined in the present application, the expression "machine learning model" may refer to a mathematical model for making future predictions based on patterns learned from samples of data or "training data." Various learning algorithms can be used to map correlations between input data and output data. These correlations form the mathematical model that can be used to make future predictions on new input data. Such a predictive model may include one or more logistic regression models, Bayesian models, or neural networks (NNs). Moreover, a "deep neural network," in the context of deep learning, may refer to an NN that utilizes multiple hidden layers between input and output layers, which may allow for learning based on features not explicitly defined in raw data.

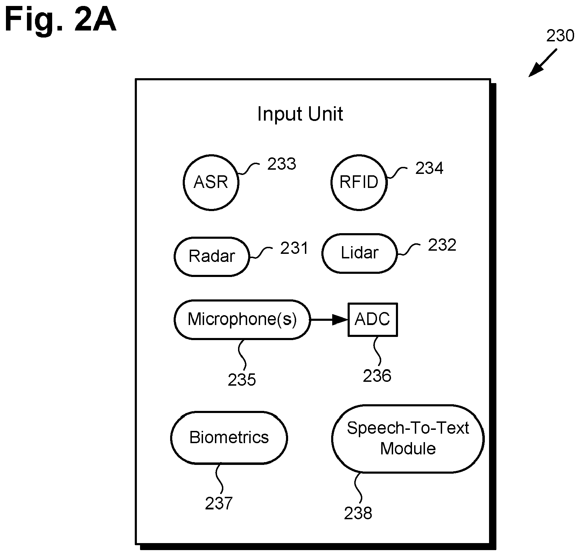

Figure 2A shows a more detailed diagram of input unit 230 suitable for use as a component of social agent 101, in Figure 1, according to one implementation. As shown in Figure 2A, input unit 230 may include one or more of radio detection and ranging (radar) detector 231, laser imaging, detection, and ranging (lidar) detector 232, automatic speech recognition (ASR) sensor 233, radio-frequency identification (RFID) sensor 234, one or more microphones or microphone arrays 235 (hereinafter "microphone(s) 235"), analog-to-digital converter (ADC) 236, biometrics sensor 237, and Speech-To-Text (STT) module 238. Input unit 230 corresponds in general to input unit 130, in Figure 1. Thus, input unit 130 may share any of the characteristics attributed to input unit 230 by the present disclosure, and vice versa.

It is noted that the specific features shown to be included in input unit 130/230 are merely exemplary, and in other implementations, input unit 130/230 may include more, or fewer, features than radar detector 231, lidar detector 232, ASR sensor 233, RFID sensor 234, microphone(s) 235, ADC 236, biometrics sensor 237, and STT module 238. Moreover, in other implementations, input unit 130/230 may include a feature or features other than one or more of radar detector 231, lidar detector 232, ASR sensor 233, RFID sensor 234, microphone(s) 235, ADC 236, biometrics sensor 237, and STT module 238. For example, in implementations in which the anonymity of user(s) 128a/128b or person(s) 129a/129b is a priority, input unit 130/230 may include radar detector 231 or lidar detector 232, microphone(s) 235, and ADC 236, but may omit ASR sensor 233, RFID sensor 234, and biometrics sensor 237.

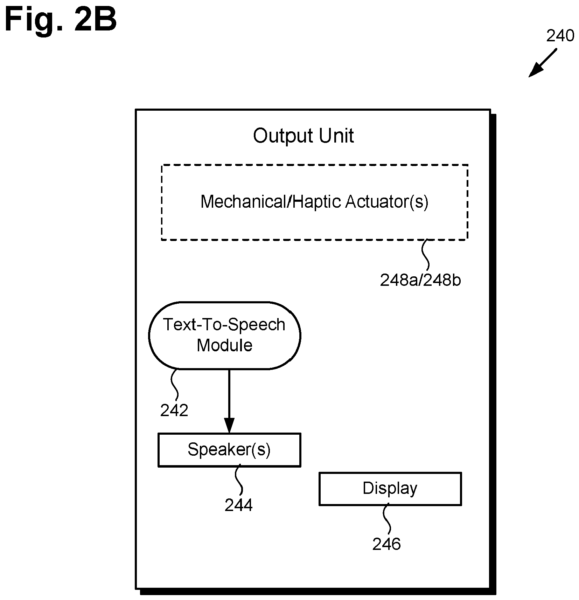

Figure 2B shows a more detailed diagram of output unit 240 suitable for use as a component of social agent 101, in Figure 1, according to one implementation. As shown in Figure 2B, output unit 240 may include one or more of Text-To-Speech (TTS) module 242 in combination with one or more audio speakers 244 (hereinafter "speaker(s) 244"), and display 246. As further shown in Figure 2B, in some implementations, output unit 240 may include one or more mechanical actuators 248a (hereinafter "mechanical actuator(s) 248a"), one or more haptic actuators 248b (hereinafter "haptic actuator(s) 248b"), or a combination of mechanical actuator(s) 248a and haptic actuators(s) 248b. It is also noted that, when included as a component or components of output unit 240, mechanical actuator(s) 248a may be used to produce facial expressions by social agent 101, and/or to articulate one or more limbs or joints of social agent 101. Output unit 240 corresponds in general to output unit 140, in Figure 1. Thus, output unit 140 may share any of the characteristics attributed to output unit 240 by the present disclosure, and vice versa.

The specific features shown to be included in output unit 140/240 are merely exemplary, and in other implementations, output unit 140/240 may include more, or fewer, features than TTS module 242, speaker(s) 244, display 246, mechanical actuator(s) 248a, and haptic actuator(s) 248b. Moreover, in other implementations, output unit 140/240 may include a feature or features other than one or more of TTS module 242, speaker(s) 244, display 246, mechanical actuator(s) 248a, and haptic actuator(s) 248b. It is further noted that display 246 of output unit 140/240 may be implemented as a liquid crystal display (LCD), light-emitting diode (LED) display, organic light-emitting diode (OLED) display, quantum dot (QD) display, or any other suitable display screen that perform a physical transformation of signals to light.

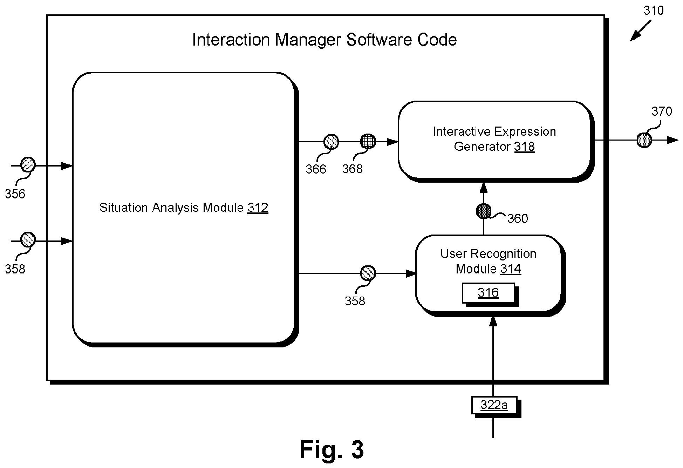

Figure 3 shows exemplary interaction manager software code 310 suitable for execution by processing hardware 104 of system 100, in Figure 1, according to one implementation. As shown in Figure 3, interaction manager software code 310 may include situation analysis module 312 and user recognition module 314, which may include one or more trained machine learning models 316 (hereinafter "ML model(s) 316"), such as trained neural networks (NNs), for example. As further shown in Figure 3, interaction manager software code 310 may also include interactive expression generator 318. In addition, Figure 3 shows radar data 356 and audio data 358 received as inputs to situation analysis module 312 of interaction manager software code 310, interaction history 322a obtained from interaction history database 120, in Figure 1, and interactive expression or expressions 370 (hereinafter "interactive expression(s)" 370) provided as output by interactive expression generator 318 of interaction manager software code 310. Also shown in Figure 3 are user recognition data 360, location determination data 366, and environment determination data 368.

Interaction manager software code 310 corresponds in general to interaction manager software code 110, in Figure 1, and those corresponding features may share any of the characteristics attributed to either corresponding feature by the present disclosure. That is to say, like interaction manager software code 310, interaction manager software code 110 may include features corresponding respectively to situation analysis module 312, user recognition module 314 including ML model(s) 316, and interactive expression generator 318. In addition, interaction history 322a corresponds in general to interaction history 122a, in Figure 1 and those corresponding features may share any of the characteristics attributed to either corresponding feature by the present disclosure.

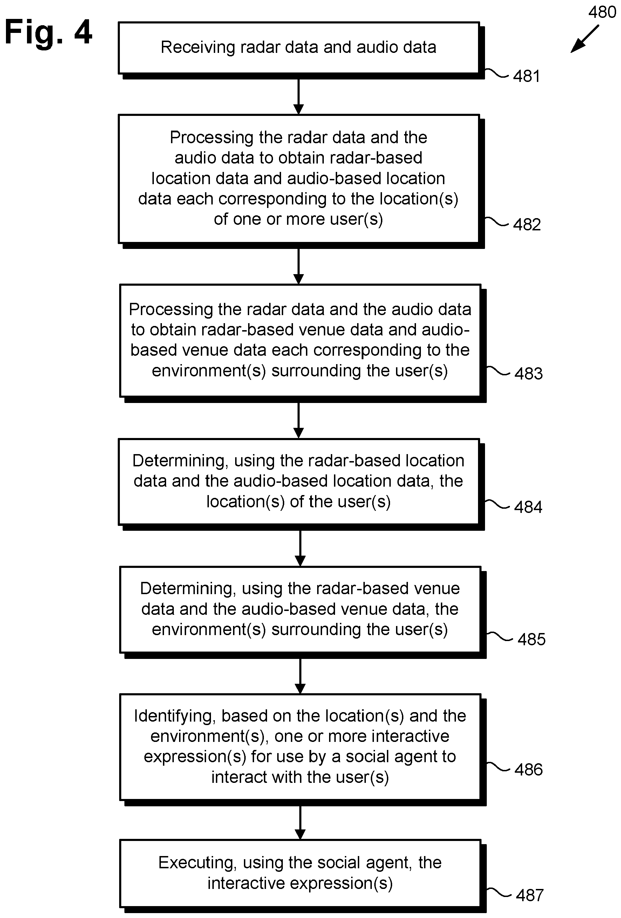

The functionality of interaction manager software code 110/310 will be further described by reference to Figure 4. Figure 4 shows flowchart 480 presenting an exemplary method for use by a system for providing a situationally aware social agent, according to one implementation. With respect to the method outlined in Figure 4, it is noted that certain details and features have been left out of flowchart 480 in order not to obscure the discussion of the inventive features in the present application.

Referring to Figure 4, with further reference to Figures 1, 2A, and 3, flowchart 480 may begin with receiving radar data 356 and audio data 358 (action 481). Radar data 356 may include data obtained and transmitted to system 100 by radar 152a/152b situated in and possibly moving within venue 150. Alternatively, or in addition, radar data 356 may include data obtained by radar detector 231 included as a feature of input unit 130/230. Radar data 356 may distinguish between hard objects, such as furniture for example, static (i.e., non-moving) objects, and living creatures such as dogs, cats, or other domestic animals, as well as human beings such as user(s) 128a/128b and person(s) 129a/129b in venue 150. Moreover, radar data 356 may enable the generation of one or more point clouds or radar data "blobs" (hereinafter "point cloud(s)") identifying the number of objects, user(s) 128a/128b, and person(s) 129a/129b present in venue 150, their approximate locations relative to social agent 101, and in some implementations, physical manifestations such as gestures, posture, and head position. That is to say, radar 152a/152b and radar detector 231 are implemented as low information detection systems that are merely able to capture conversational dynamics and approximate location while preserving the privacy of user(s) 128a/128b and persons 129a/129b.

Audio data 358 may include data obtained and transmitted to system 100 by microphone(s) 154a/154b situated in and possibly moving within venue 150. Alternatively, or in addition, audio data 358 may include data obtained by microphone(s) 235 included as a feature or features of input unit 130/230. Moreover, in some implementations, audio data 358 may include data that has undergone processing by a feature of input unit 130/230. For example, where an interaction of social agent 101 with user(s) 128a/128b includes a dialogue between social agent 101 and user(s) 128a/128b, audio data 358 may include one or more of audio obtained by microphone(s) 154a/154b or microphone(s) 235, biometric data provided by biometric sensor 237, and speech-to-text data provided by STT module 238 of input unit 130/230. Audio data 358 may further include microphone metadata generated by one or more meta-sensors of microphone(s) 154a/154b or microphone(s) 235. That metadata may describe the angle of arrival of sound at microphone(s) 154a/154b or microphone(s) 235, as well as the presence of background noise, background conversations among person(s) 129a/129b, or sound produced by entertainment system 126 within venue 150.

Radar data 356 and audio data 358 may be received in action 481 by interaction manager software code 110/310, executed by processing hardware 104 of system 100, and using situation analysis module 312. Radar data 356 and audio data 358 may be timestamped at any desired level of granularity. For example radar data 356 may be timestamped based on any predetermined or dynamically determined timing schedule, while audio data 358 may be timestamped based on the same, or another predetermined or dynamically determined timing schedule, or down to and including at the word level when audio data 358 includes speech or speech-to-text data. Such timestamping may be performed by processing hardware 104 of system 100, or using situation analysis module 312 of interaction manager software code 110/310 upon substantially continuous receipt of radar data 356 and audio data 358. Thus, in some implementations, radar data 356 and audio data 358 are time aligned with the interaction of social agent 101 with user(s) 128a/128b.

Flowchart 480 further includes processing radar data 356 and audio data 358 to obtain radar-based location data and audio-based location data each corresponding respectively to one or more locations (hereinafter "location(s)") of user(s) 128a/128b (action 482). Radar data 356 and audio data 358 may be processed to obtain radar-based location data and audio-based location data in action 482 by interaction manager software code 110/310, executed by processing hardware 104 of system 100, and using situation analysis module 312.

Processing of radar data 356 in action 482 may include determining changes in the point cloud(s) detected by one or more of radar 152a/152b and radar detector 231 with respect to time. Changes in the size of the point cloud(s) may be indicative that user(s) 128a/128b is/are moving toward or away from social agent 101, for instance. Alternatively, changes in the size of the point cloud(s) may signal a change in the number of user(s) 128a/128b interacting with social agent 101. For example, the arrival of an additional user would cause a point cloud to enlarge, while the departure of a user would cause the point cloud to shrink. The size and location of the point cloud(s) may be plotted as a function of time using timestamped radar data 356, and that plot may be analyzed to estimate the location and movement of user(s) 128a/128b in venue 150.

Processing of audio data 358 in action 482 may include determining changes in the audio captured by one or more of microphone(s) 154a/154b and microphone(s) 235 with respect to time. Changes in audio volume may be indicative that user(s) 128a/128b is/are moving toward or away from social agent 101. Microphone metadata included in audio data 358 that identifies the angle of arrival of sound at microphone(s) 154a/154b or microphone(s) 235 may be used to approximate the location of user(s) 128a/128b relative to social agent 101. Moreover, biometric characteristics of audio data 358 may be analyzed to detect the arrival or departure of one or more of user(s) 128a/128b during an interaction of social agent 101 with user(s) 128a/128b. The volume, angle of arrival, and biometric characteristics of audio captured by one or more of microphone(s) 154a/154b and microphone(s) 235 may be plotted as a function of time using timestamped audio data 358, and that plot may also be analyzed to estimate the location and movement of user(s) 128a/128b in venue 150. Thus, in various implementations, processing hardware 104 executes interaction manager software code 110/310 to use one or both of radar data 356 and audio data 358 to recognize relocation of one or more of user(s) 128a/128b relative to social agent 101.

Flowchart 480 further includes processing radar data 356 and audio data 358 to obtain radar-based venue data and audio-based venue data each corresponding respectively to the one or more environments (hereinafter "environment(s)") surrounding user(s) 128a/128b (action 483). Radar data 356 and audio data 358 may be processed to obtain radar-based venue data and audio-based venue data in action 483 by interaction manager software code 110/310, executed by processing hardware 104 of system 100, and using situation analysis module 312.

Processing of radar data 356 in action 483 may include detecting the presence and identifying the locations of inanimate or static objects, such as furniture, promotional displays, and entertainment system 126, for example, within venue 150. In some implementations, inanimate objects detected using radar data 356 may be correlated with features included in venue map 124. It is noted that in some implementations, venue map 124 may be predetermined and stored in memory 106 of system 100. However, in other implementations, venue map 124 may be generated dynamically by system 100, using lidar detector 232, for example.

Processing of audio data 358 in action 483 may also include detecting the presence and identifying the locations of inanimate or static objects within venue 150 based on their audio properties. For example sound produced by entertainment system 126 may be used to identify the presence and operating status of that feature within venue 150. It is noted that although in some implementations, system 100 may rely on audio data 358 to detect and identify the subject matter of sound produced by entertainment system 126, in other implementations, output signals from such known devices may be fed directly as data inputs to system 100, and those data inputs can be used directly by interaction manager software code 110/310, executed by processing hardware 104, to enhance the SNR of audio data 358 or the situational awareness of social agent 101. In addition, or alternatively, audio data identified as background conversation may be used to detect the presence of person(s) 129a/129b, as well as the number of person(s) 129a/129b present. In some implementations, person(s) 129a/129b and audio producing objects detected using audio data 358 may be correlated with features included in venue map 124.

With respect to actions 482 and 483 described above, it is noted that although flowchart 480 shows action 482 as preceding action 483, that representation is merely by way of example. In some implementations, actions 482 and 483 may be performed in parallel, i.e., substantially concurrently, while in other implementations, action 483 may precede action 482.

Flowchart 480 further includes determining, using the radar-based location data and the audio-based location data obtained in action 482, the location(s) of user(s) 128a/128b in venue 150 (action 484). Determination of the location(s) of user(s) 128a/128b may be performed based on correlation of the radar-based location data with the audio-based location data. Correlation of the radar-based location data with the audio-based location data advantageously enables system 100 to identify and track a conversation and user(s) 128a/128b engaged in that conversation at any point in time. In addition, such correlation of the radar-based location data with the audio-based location data further advantageously enables system 100 to disregard or make us of additional context from any background sounds in the environment(s) of user(s) 128a/128b, as well to use the correlation as a metric for aiming microphone(s) 154a/154b or microphone(s) 235 or radar 152a/152b or radar detector 231, or for re-engagement with the conversation at a later time.

For example, where the radar-based location data and the audio-based location data have each been plotted as a function of time, those plots can be compared. In one such implementation, the radar-based location data plot and the audio-based location data plot having the lowest cost fit, using a greedy algorithm for example, may be correlated and identified as corresponding to the same user, person, or object. Based on that correlation, the location(s) and movement(s) of each of user(s) 128a/128b can be determined. Determination of the location(s) of user(s) 128a/128b in action 484 may be performed by interaction manager software code 110/310, executed by processing hardware 104 of system 100, using situation analysis module 312, and may result in location determination data 366 being provided as an input to interactive expression generator 318.

Flowchart 480 further includes determining, using the radar-based venue data and the audio-based venue data obtained in action 483, the environment(s) surrounding user(s) 128a/128b (action 485). Determination of the environment(s) of user(s) 128a/128b may be performed based on a comparison and correlation of the radar-based venue data with the audio-based venue data. For example, a point cloud corresponding to the location of person(s) 129a/129b may be correlated with audio determined to be background conversation originating from that location to determine that the environment(s) of user(s) 128a/128b includes person(s) 129a/129b.

As another example, a point cloud corresponding to the location of entertainment system 126 may be correlated with audio determined to be music or TV content output by entertainment system 126 to determine that the environment(s) of user(s) 128a/128b includes entertainment system 126. Alternatively, or in addition, a point cloud corresponding to the location of an inanimate object and the absence of audio originating from that object may result in venue map being consulted for identification of the object. For instance, venue map 124 may reveal that the environment of one or more of user(s) 128a/128b includes a promotional display for a product or service. Determination of the environment(s) of user(s) 128a/128b in action 485 may be performed by interaction manager software code 110/310, executed by processing hardware 104 of system 100, using situation analysis module 312, and may result in environment determination data 368 being provided as an input to interactive expression generator 318.

With respect to actions 484 and 485 described above, it is noted that although flowchart 480 shows action 484 as preceding action 485, that representation is merely by way of example. In some implementations, actions 484 and 485 may be performed in parallel, i.e., substantially concurrently, while in other implementations, action 485 may precede action 484.

Flowchart 480 further includes identifying, based on the location(s) and the environment(s) of user(s) 128a/128b determined in actions 484 and 485, interactive expression(s) 370 for use by social agent 101 to interact with user(s) 128a/128b (action 486). As noted above, social agent 101 may assume any of a variety of forms, such as a speaker, display, figurine, or other tabletop or shelf-top device, as a wall mounted speaker or display, or as a robot, to name a few examples. Moreover, in some implementations, social agent 101 may be a virtual character rendered on a display. As a result, interactive expression(s) 370 too may take a variety of forms, and may include one or more of speech, text, gestures, facial expressions, and body postures, for example. Identification of interactive expression(s) 370 in action 486 may be performed by interaction manager software code 110/310, executed by processing hardware 104 of system 100, and using interactive expression generator 318, based on location determination data 366 and environment determination data 368.

The location(s) and environment(s) of user(s) 128a/128b may influence the identification of interactive expression(s) 370 in a number of different ways. For example, in a use case in which the environment(s) surrounding user(s) 128a/128b include background conversations of person(s) 129a/129b, processing hardware 104 may execute interaction manager software code 110/310 to use background conversations irrelevant to the interaction of social agent 101 with user(s) 128a/128b to advantageously enhance the signal-to-noise ratio (SNR) of audio data 358, for example by filtering those irrelevant background sounds out of audio data 358. Alternatively, in a similar environmental situation, processing hardware 104 may execute interaction manager software code 110/310 to recognize that several background conversations address the same topic, and may include that topic, or the preoccupation of person(s) 129a/129b with that topic, in environment determination data 368 for possible incorporation into interactive expression(s) 370.

Alternatively, or in addition, in a use case in which the environment surrounding user(s) 128a/128b includes audio of a news broadcast output by entertainment system 126, for example, processing hardware 104 may execute interaction manager software code 110/310 to use situation analysis module 312 to include the subject matter of the news broadcast in environment determination data 368 for possible incorporation into interactive expression(s) 370. Alternatively, in some use cases processing hardware 104 may execute integration manager software code 110/310 to use radar data 356 to recognize entertainment system 126, as well as other sound producing inanimate objects, as inanimate sources of sound, and to use the sounds produced by such inanimate sources to advantageously enhance the SNR of audio data 358, for example by filtering those sounds out of audio data 358. As yet another example, in use cases in which location determination data 366 and environment determination data 368 indicate that user(s) 128a/128b are situated, i.e., sitting or standing, near a promotional display for a product or service, processing hardware 104 may execute interaction manager software code 110/310 to use interactive expression generator 318 to identify interactive expression(s) 370 so as to refer to the product or service, or to the promotional display itself.

Thus, in some use cases the environment of user(s) 128a/128b may include one or more sources of sound other than user(s), and processing hardware 104 may execute interaction analysis software code 110/310 to use interactive expression generator 318 to identify interactive expression(s) 370 using the audio produced by at least one of the sources of sound other than user(s) 128a/128b. Moreover, as described above, in various use cases the one or more sources of sound other than user(s) 128a/128b may include one or more of entertainment system 126 or speech among person(s) 129a/129b.

In use cases in which social agent 101 has previously interacted with user(s) 128a/128b, either in the course of a present interaction session or over the course of an interaction spanning multiple, temporally distinct, interaction sessions, processing hardware 104 may execute interaction analysis software code 110/310 to use interactive expression generator 318 to identify interactive expression(s) 370 using an interaction history of one or more of user(s) 128a/128b. For example, in an exemplary use case in which social agent 101 is interacting with user 128a having interaction history 122a/322a, processing hardware 104 may execute interaction analysis software code 110/310 to utilize user recognition module 314 to recognize user 128a based on audio data 358, to obtain interaction history 122a/322a of user 128a from interaction history database 120, and to provide user recognition data 360 including interaction history 122a/322a as an input to interactive expression generator 318. Interactive expression generator 318 may then base its identification of interactive expression(s) 370 on user recognition data 360 as well as on location determination data 366 and environment determination data 368.

Recognition of user(s) 128a/128b may be performed in any of a number of different ways. For example, in some implementations, user(s) 128a/128b may be invited to enroll in a self-identification campaign, and may each be assigned a pseudo-identification (pseudo-ID), which is also assigned to the interaction history of that user, thereby enabling system 100 to recognize each of user(s) 128a/128b while preserving the anonymity of their true identities. Such an enrollment process may include each of user(s) 128a/128b providing one or more voice samples for analysis and use as reference by user recognition module 314 to recognize each of user(s) 128a/128b. Alternatively, or in addition, in some implementations enrollment by user(s) 128a/128b in the self-identification campaign may result in each of user(s) 128a/128b being issued an RFID emitter detectable by RFID sensor 234 of input unit 130/230, while maintaining anonymity of the true identities of user(s) 128a/128b.

In use cases in which one or more of user(s) 128a/128b opt not to enroll in a self-identification campaign, any suitable speaker diarisation technique may be used by system 100 to recognize user(s) 128a/128b. It is noted that the data describing the present or previous interactions of social agent 101 with user(s) 128a/128b and retained in interaction history database 120 or used in a speaker diarisation process is exclusive of personally identifiable information (PII) of user(s) 128a/128b. That is to say, although system 100 providing social agent 101 is typically able to distinguish between or among anonymous users 128a/128b, system 100 does not retain information describing the age, gender, race, ethnicity, or any other PIT of any user with whom social agent 101 converses or otherwise interacts.

Thus, in some implementations, processing hardware 104 may execute interaction manager software code 110/310 to recognize, using audio data 358, one or more of user(s) 128a/128b as an anonymous user with whom social agent 101 has previously interacted. Moreover, as shown in Figure 3, in some implementations, user recognition module 314 of interaction manager software code 110/310 may include trained ML model(s) 316, such as one or more trained neural networks (NNs) for example. In those implementations, processing hardware 104 may execute interaction manager software code 110/310 to use trained ML model(s) 316 to recognize user(s) 128a/128b inferentially.

Flowchart 480 may further include executing, using social agent 101, interactive expression(s) 370 (action 487). As noted above, interactive expression(s) 370 may include one or more of speech, text, gestures, facial expressions, and body postures performed by a virtual character or a robot, for example or audio, video, or audio-video content output by an interactive machine. Thus, referring to Figure 2B, action 487 may be performed using one or more of TTS module 242 and speaker(s) 244, display 246, mechanical actuators 248a, and haptic actuators 248b of output unit 140/240. Execution of interactive expression(s) 370 using social agent 101 may be performed by interaction manager software code 110/310, executed by processing hardware 104 of system 100, and using output unit 140/240. With respect to the method outlined by flowchart 480, it is emphasized that, in some implementations, actions 481 through 487 may be performed in an automated process from which human involvement may be omitted.

Thus, the present application discloses automated systems and methods for providing a situationally aware social agent that address and overcome the deficiencies in the conventional art. The novel and inventive concepts disclosed by the present application enable the implementation of a social agent capable of using environmental cues over and above direct interactions with one or more users to influence identification of appropriate interactive expressions for use by the social agent. As discussed above, such environmental cues may include background conversations that do not include the user(s) or the social agent, or audio outputs from one or more entertainment devices or systems. In some implementations the situationally aware social agent may be configured to distinguish between user relevant environmental cues and background noise, and to advantageously filter out the latter to enhance sensitivity to the former, thereby enabling interactions with the users that are natural, engaging, and attentive to the environmental context or "situation" in which the interaction is occurring.

From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the scope of those concepts. As such, the described implementations are to be considered in all respects as illustrative and not restrictive. It should also be understood that the present application is not limited to the particular implementations described herein, but many rearrangements, modifications, and substitutions are possible without departing from the scope of the present disclosure.

There are further options of solving the problem underlying the invention as defined above, i.e. the need in the art for an automated solution for providing a situationally aware social agent capable of interacting with multiple users concurrently in an natural and attentive manner.

In detail:
A system comprising:
a processing hardware; and
a memory storing a software code;
the processing hardware configured to execute the software code to:
   receive radar data and audio data;
   process the radar data and the audio data to obtain radar-based location data and audio-based location data each corresponding to a location of at least one user;
   process the radar data and the audio data to obtain radar-based venue data and audio-based venue data each corresponding to an environment surrounding the at least one user;
   determine, using the radar-based location data and the audio-based location data, the location of the at least one user;
   determine, using the radar-based venue data and the microphone-based venue data, the environment surrounding the at least one user; and
   identify, based on the location and the environment, an interactive expression for use by a social agent to interact with the at least one user.

The above system, wherein the at least one user comprises a plurality of users, the processing hardware being further configured to execute the software code to:
process the radar data and the audio data to obtain radar-based location data and audio-based location data each corresponding respectively to a location of each of the plurality of users;
process the radar data and the audio data to obtain radar-based venue data and audio-based venue data each corresponding respectively to an environment surrounding each of the plurality of users;
determine, using the radar-based location data and the audio-based location data, a respective location of each of the plurality of users;
determine, using the radar-based venue data and the microphone-based venue data, a respective environment surrounding each of the plurality of users; and
identify, based on each respective location and each respective environment, one or more interactive expressions for use by the social agent to interact with the plurality of users.

The system, wherein the processing hardware is further configured to execute the software code to:
execute, using the social agent, the interactive expression.

The system, wherein the interactive expression comprises one of speech or text.

The system, wherein the social agent comprises one of a virtual character rendered on a display or a robot.

The system, wherein the interactive expression comprises at least one of a gesture, a facial expression, or a posture.

The system, wherein the processing hardware is further configured to execute the software code to:
recognize, using the audio data, the at least one user as an anonymous at least one user with whom the social agent has previously interacted.

The system, further comprising:
a trained machine learning model;
wherein the hardware processor is configured to execute the software code to utilize the trained machine learning model to recognize the at least one user.

The system, wherein the memory further stores an interaction history database including an interaction history of the social agent with the at least one user, and wherein the processing hardware is configured to execute the software code to identify, further using the interaction history, the interactive expression for use by the social agent to interact with the at least one user.

The system, wherein the processing hardware is further configured to execute the software code to:
recognize, using at least one of the radar data or the audio data, a relocation of the at least one user relative to the social agent.

The system, wherein the environment of the at least one user includes one or more sources of sound other than the at least one user, and wherein the processing hardware is configured to execute the software code to enhance, using at least one of sound produced by or a data input received from at least one of the one or more sources of sound other than the at least one user, a signal-to-noise ratio of the audio data.

The system, wherein the environment of the at least one user includes one or more sources of sound other than the at least one user, and wherein the processing hardware is configured to execute the software code to identify, further using at least one of sound produced by or a data input received from at least one of the one or more sources of sound other than the at least one user, the interactive expression for use by the social agent to interact with the at least one user.

The system, wherein the environment of the at least one user includes one or more sources of sound other than the at least one user, and wherein the processing hardware is further configured to execute the software code to recognize, using the radar data, at least one of the one or more sources of sound other than the at least one user as an inanimate source of sound.

A method for use by a system including a processing hardware and a memory storing a software code, the method comprising:
receiving, by the software code executed by the processing hardware, radar data and audio data;
processing, by the software code executed by the processing hardware, the radar data and the audio data to obtain radar-based location data and audio-based location data each corresponding to a location of at least one user;
processing, by the software code executed by the processing hardware, the radar data and the audio data to obtain radar-based venue data and audio-based venue data each corresponding to an environment surrounding the at least one user;
determining, by the software code executed by the processing hardware and using the radar-based location data and the audio-based location data, the location of the at least one user;
determining, by the software code executed by the processing hardware and using the radar-based venue data and the audio-based venue data, the environment surrounding the at least one user; and
identifying, by the software code executed by the processing hardware based on the location and the environment, an interactive expression for use by a social agent to interact with the at least one user.

The above method, wherein the at least one user comprises a plurality of users, the method further comprising:
processing, by software code executed by the processing hardware, the radar data and the audio data to obtain radar-based location data and audio-based location data each corresponding respectively to a location of each of the plurality of users;
processing, by software code executed by the processing hardware, the radar data and the audio data to obtain radar-based venue data and audio-based venue data each corresponding respectively to an environment surrounding each of the plurality of users;
determining, by software code executed by the processing hardware and using the radar-based location data and the audio-based location data, a respective location of each of the plurality of users;
determining, by software code executed by the processing hardware and using the radar-based venue data and the microphone-based venue data, a respective environment surrounding each of the plurality of users; and
identifying, by software code executed by the processing hardware based on each respective location and each respective environment, one or more interactive expressions for use by the social agent to interact with the plurality of users.

The method further comprising:
executing, by the software code executed by the processing hardware and using the social agent, the interactive expression.

The method, wherein the interactive expression comprises one of speech or text.

The method, wherein the social agent comprises one of a virtual character rendered on a display or a robot.

The method, wherein the interactive expression comprises at least one of a gesture, a facial expression, or a posture.

The method, further comprising:
recognizing, by the software code executed by the processing hardware and using the audio data, the at least one user as an at least one anonymous user with whom the social agent has previously interacted.

The method, wherein the system further includes a trained machine learning model, the method further comprising:
utilizing the trained machine learning model, by the software code executed by the processing hardware, to recognize the at least one user.

The method, wherein the memory further stores an interaction history database including an interaction history of the social agent with the at least one user, and wherein identifying the interactive expression for use by the social agent to interact with the at least one user further uses the interaction history.

The method, further comprising:
recognizing, by the software code executed by the processing hardware and using at least one of the radar data or the audio data, a relocation of the at least one user relative to the social agent.

The method, wherein the environment of the at least one user includes one or more sources of sound other than the at least one user, the method further comprising:
enhancing, by the software code executed by the processing hardware and using at least one of sound produced by or a data input received from at least one of the one or more sources of sound other than the at least one user, a signal-to-noise ratio of the audio data.

The method, wherein the environment of the at least one user includes one or more sources of sound other than the at least one user, to the method further comprising:
identifying, by the software code executed by the processing hardware and further using at least one of sound produced by or a data input received from at least one of the one or more sources of sound other than the at least one user, the interactive expression for use by the social agent to interact with the at least one user.

The method, wherein the environment of the at least one user includes one or more sources of sound other than the at least one user, the method further comprising:
recognizing, by the software code executed by the processing hardware and using the radar data, at least one of the one or more sources of sound other than the at least one user as an inanimate source of sound.

## Claims

1. A method comprising:
receiving radar data (356) and audio data (358);
processing the radar data (356) and the audio data to obtain radar-based location data and audio-based location data each corresponding to a location of at least one user (128a/128b);
processing the radar data (356) and the audio data (358) to obtain radar-based venue data and audio-based venue data each corresponding to an environment surrounding the at least one user (128a/128b);
determining, using the radar-based location data and the audio-based location data, the location of the at least one user (128a/128b);
determining, using the radar-based venue data and the audio-based venue data, the environment surrounding the at least one user (128a/128b); and
identifying, based on the location and the environment, an interactive expression for use by a social agent (101) to interact with the at least one user (128a/128b).

2. The method of claim 1, wherein the at least one user (128a/128b) comprises a plurality of users (128a/128b), the method further comprising:
processing the radar data (356) and the audio data (358) to obtain radar-based location data and audio-based location data each corresponding respectively to a location of each of the plurality of users (128a/128b);
processing the radar data (356) and the audio data (358) to obtain radar-based venue data and audio-based venue data each corresponding respectively to an environment surrounding each of the plurality of users (128a/128b);
determining, using the radar-based location data and the audio-based location data, a respective location of each of the plurality of users (128a/128b);
determining, using the radar-based venue data and the microphone-based venue data, a respective environment surrounding each of the plurality of users (128a/128b); and
identifying, based on each respective location and each respective environment, one or more interactive expressions for use by the social agent (101) to interact with the plurality of users (128a/128b).

3. The method of at least one of claims 1 or 2, further comprising:
executing, using the social agent (101), the interactive expression.

4. The method of at least one of claims 1 to 3, wherein the interactive expression comprises one of speech or text.

5. The method of at least one of claims 1 to 4, wherein the social agent (101) comprises one of a virtual character rendered on a display (246) or a robot.

6. The method of claim 5, wherein the interactive expression comprises at least one of a gesture, a facial expression, or a posture.

7. The method of at least one of claims 1 to 6, further comprising:
recognizing, using the audio data (358), the at least one user (128a/128b) as an at least one anonymous user (128a/128b) with whom the social agent (101) has previously interacted.

8. The method of claim 7, comprising:
utilizing a trained machine learning model (316) to recognize the at least one user (128a/128b).

9. The method of claims 7 or 8, wherein identifying the interactive expression for use by the social agent (101) to interact with the at least one user (128a/128b) further uses an interaction history of the social agent (101) with the at least one user (128a/128b).

10. The method of at least one of claims 7 to 9, further comprising:
recognizing, using at least one of the radar data (356) or the audio data (358), a relocation of the at least one user (128a/128b) relative to the social agent (101).

11. The method of claim 1, wherein the environment of the at least one user (128a/128b) includes one or more sources of sound other than the at least one user (128a/128b), the method further comprising:
enhancing, using at least one of sound produced by or a data input received from at least one of the one or more sources of sound other than the at least one user (128a/128b), a signal-to-noise ratio of the audio data (358).

12. The method of at least one of claims 1 to 11, wherein the environment of the at least one user (128a/128b) includes one or more sources of sound other than the at least one user (128a/128b), to the method further comprising:
identifying, using at least one of sound produced by or a data input received from at least one of the one or more sources of sound other than the at least one user (128a/128b), the interactive expression for use by the social agent (101) to interact with the at least one user (128a/128b).

13. The method of claim 1, wherein the environment of the at least one user (128a/128b) includes one or more sources of sound other than the at least one user (128a/128b), the method further comprising:
recognizing, using the radar data (356), at least one of the one or more sources of sound other than the at least one user (128a/128b) as an inanimate source of sound.

14. A system comprising a processing hardware and a memory storing a software code (110, 310), **characterized by**:
the processing hardware adapted to execute the software code (110, 310) to perform the method of any of claims 1-13.
